# EUROPÄISCHE PATENTANMELDUNG

(11) **EP 4 796 341 A1**
(43) Veröffentlichungstag der Anmeldung: **26.08.2026**
(21) Anmeldenummer: 26160360.9
(22) Anmeldetag: 24.02.2026
(51) Int. Cl.: B60B 1/00, B60B 1/02, B60B 1/04

(54) **LAUFRADKOMPONENTE FÜR EIN FAHRRAD**

(30) Priorität: 25.02.2025 DE 102025107081
(71) Anmelder: DT Swiss AG, 2504 Biel (CH)
(72) Erfinder: Henig, Andreas, CH-2504 Biel (CH)
(74) Vertreter: BSB Patentanwälte Schütte & Engelen Partnerschaft mbB

(57) **Zusammenfassung**

Laufradkomponente für Fahrräder, umfassend eine Speiche (10) (41) und ein Speichennippel (50), wobei die Speiche ein Mittelstück (11) und zwei Endstücke (20, 30) umfasst. Die Speiche (10) ist aus einem Faserverbundwerkstoff (2) gefertigt. Der Speichennippel (50) und ein Endstück (30) der Speiche (10) weisen miteinander zusammenwirkende Gewinde (43, 44) auf, um die Speiche (10) und den Speichennippel (50) miteinander zu verbinden. Die Gewinde (43, 44) sind in axialer Richtung (7) unsymmetrisch ausgebildet, sodass jeweils eine Gewindeflanke (43a, 44a) erheblich flacher als die andere steilere Gewindeflanke (43b, 44b) ausgebildet ist. Die Endstücke (20, 30) sind einstückig mit dem Mittelstück (11) ausgebildet sind und bilden jeweils ein Ende (16, 17) der Speiche (10). Wenigstens einige der Verstärkungselemente (4) sind als Langfasern (5) ausgebildet und erstrecken sich in einem Querschnittsbereich (25, 35) vollständig durch das Mittelstück (11) und durch die Endstücke.

## Beschreibung

Die vorliegende Erfindung betrifft eine Laufradkomponente für ein Fahrzeug und insbesondere für ein im bestimmungsgemäßen Normalbetrieb oder Regelbetrieb wenigstens teilweise muskelbetriebenes Zwei- oder Mehrrad wie ein Fahrrad und umfasst ein Speichensystem mit zwei miteinander zusammenwirkenden Verbindungselementen bzw. Speicheneinheiten, nämlich mit einem als Speiche ausgebildeten Verbindungselement und mit einem als Speichennippel ausgebildeten Verbindungselement. Eine Speiche des Speichensystems umfasst ein Mittelstück und zwei Endstücke, um die Speiche mit einer Nabe eines Laufrades bzw. einer Felge eines Laufrades lösbar zu verbinden. Dabei kann die Speiche aus Faserverbundwerkstoff gefertigt sein und umfasst dann ein Matrixmaterial und darin eingebettete Verstärkungselemente.

Es sind Laufräder für Fahrräder aus Faserverbundwerkstoff bekannt geworden, bei denen die Speichen direkt mit der Felge zusammen hergestellt werden. Solche Laufräder können ein geringes Gewicht aufweisen, sind aber komplex in der Herstellung und können nicht ohne Weiteres gewartet werden. Schon bei kleineren Defekten muss regelmäßig das ganze Laufrad ausgetauscht werden, was nicht sehr nachhaltig ist. Oder das Laufrad muss aufwendig repariert werden.

Mit der US 5,350,221 ist eine separate Speiche aus Faserverbundwerkstoff bekannt geworden, die durch ein Spritzgießverfahren hergestellt wird. Dabei wird in einen Hohlraum einer Herstellform kurzfasriger Faserverbundwerkstoff eingespritzt, sodass sich das Fasermaterial in dem Hohlraum der Form homogen verteilt. An dem einen Ende weist die Speiche einen gekröpften Kopf und an dem anderen Ende ein Gewinde zum Verschrauben mit einem Speichennippel auf. Eine solche Speiche hat sich in den letzten Jahrzehnten am Markt nicht durchgesetzt. In der gleichen Schrift ist auch eine Speiche beschrieben, bei der metallische Enden eingesetzt werden, sodass die Kraft ableitenden Stellen an der Speiche aus Metall gefertigt sind.

Die US 2024/0051333 A1 offenbart eine Speiche aus Faserverbundwerkstoff, wobei zunächst ein zentraler und langgestreckter Speichenkörper durch ein Injektionsverfahren hergestellt wird, der an den Oberflächen der Enden jeweils eine Wellenstruktur aufweist. Auf die Wellenstruktur wird ein Verbindungssegment mit einer angepassten welligen Innenstruktur aufgebracht. Die Wellenstrukturen stellen eine Reibungserhöhungsstruktur zur Verfügung und verbessern den axialen Halt von dem Verbindungssegment und dem Speichenkörper. Dadurch soll ein Gleiten des Verbindungssegments entlang des Speichenkörpers verhindert werden. Durch ein Sägezahngewinde werden in axialer Richtung breitere Gewindegänge gebildet, was die Übertragbarkeit von axialen Zugkräften verbessert. Fraglich ist, ob die Speiche den hohen Belastungen Stand hält.

Mit der EP 3 459 759 B1 ist eine Speiche aus einem Faserverbundwerkstoff bekannt geworden, bei der der Speichenkörper durch ein Pultrusionsverfahren hergestellt wird. An dem Speichenkörper aus Faserverbundwerkstoff werden gestufte Flächen und geneigte Bereiche vorgesehen, auf die Hülsen aufgesteckt werden, die aus rostfreiem Stahl bestehen und die Verbindung zu der Nabe bzw. der Felge herstellen. Eine solche Speiche funktioniert grundsätzlich, ist aber komplex in der Herstellung.

Aus der WO 03/020535A2 ist eine mit Fasern verstärkte Speiche für ein Fahrradrad bekannt geworden, die einen langgestreckten Speichenkörper aufweist, auf den Hülsen aufgesteckt werden, bevor die Enden des Speichenkörpers verdickt werden, um so die separaten Hülsen an dem Speichenkörper zu halten. Die zur Befestigung der Speiche an der Felge vorgesehene Hülse weist eine kugelförmige Auflage auf, um ein Ausrichten der Speiche zu ermöglichen. Die Hülse an dem anderen Ende umfasst ein Außengewinde, um die Speiche an der Nabe mit einem entsprechenden Gewinde zu verschrauben. Der Speichenkörper wird durch Pultrusion hergestellt. Auch diese Speiche ist funktionell zufriedenstellend und ermöglicht ein leichtes Gewicht. Nachteilig ist aber der erhebliche Herstellungsaufwand.

Es ist deshalb die Aufgabe der vorliegenden Erfindung, eine Laufradkomponente mit einem leichten Speichensystem zur Verfügung zu stellen, welche hohen Belastungen Stand hält. Insbesondere soll das Speichensystem einfach herzustellen und zu montieren sein.

Diese Aufgabe wird gelöst durch eine Laufradkomponente mit den Merkmalen des Anspruchs 1 und durch eine Laufradkomponente mit den Merkmalen des Anspruchs 14 oder 15. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Laufradkomponente für ein Fahrzeug und insbesondere für ein Fahrrad umfasst (wenigstens) ein Speichensystem mit zwei miteinander zusammenwirkenden Verbindungselementen (Speicheneinheiten), nämlich ein (im Betrieb auf Zug belastetes und) als Speiche ausgebildetes Verbindungselement und wenigstens ein als Speichennippel ausgebildetes Verbindungselement. Die Speiche erstreckt sich in axialer Richtung (und ist insbesondere gerade ausgebildet und langgestreckt) und weist ein Mittelstück und zwei Endstücke auf, um die Speiche mittels der Endstücke lösbar mit einer Nabe (eines Laufrades) und mit einer Felge (des Laufrades) lösbar zu verbinden. Die Speiche ist (wenigstens teilweise und insbesondere vollständig) aus einem Faserverbundwerkstoff gefertigt ist und umfasst wenigstens ein Matrixmaterial und darin eingebettete Verstärkungselemente. Der Speichennippel und wenigstens ein Endstück der Speiche weisen miteinander zusammenwirkende Gewinde auf, um die Speiche und den Speichennippel miteinander zu verbinden, wobei eines der Gewinde als Innengewinde und eines der Gewinde als Außengewinde ausgebildet ist. Die miteinander zusammenwirkenden Gewinde der Verbindungselemente sind in axialer Richtung jeweils unsymmetrisch ausgebildet, sodass jeweils eine Gewindeflanke erheblich flacher (flachere Gewindeflanke) als die andere (und steilere) Gewindeflanke (steilere Gewindeflanke) ausgebildet ist. Die Endstücke sind einstückig mit dem Mittelstück ausgebildet und bilden jeweils ein Ende der Speiche. Wenigstens einige der Verstärkungselemente sind als Langfasern ausgebildet und erstrecken sich in einem Querschnittsbereich vollständig (d. h. durchgängig oder "endlos") durch das Mittelstück und jeweils über wenigstens einen wesentlichen Teil beider Endstücke.

Die erfindungsgemäße Laufradkomponente hat viele Vorteile. Ein erheblicher Vorteil der erfindungsgemäßen Laufradkomponente besteht darin, dass die Belastbarkeit verbessert werden kann. Das Speichensystem kann hohe Zugkräfte übertragen. Dazu tragen die Langfasern erheblich bei, die sich (jeweils einstückig) von einem Ende bis zum anderen Ende der Speiche erstrecken. Langfasern sind in die Sinne dieser Anmeldung durchgängige Fasern.

Dadurch, dass ein asymmetrisches Profil mit unterschiedlichen Flankenwinkeln vorliegt, können hohe Kräfte in axialer Richtung entlang des Speichensystems übertragen werden.

Es hat sich überraschend herausgestellt, dass sich eine solche asymmetrische Gewindeform nicht nur als Bewegungsgewinde im Bereich von Spindelpressen oder hydraulischen Pressen eignet, sondern die Bedingungen für den Einsatz an Speichensystemen besonders zuverlässig erfüllt. Die Konstruktion erlaubt die Übertragung von hohen (Zug-) Kräften in axialer Richtung auf die flachere Gewindeflanke. Dadurch ist auch eine größere Hemmung der Schraubverbindung realisierbar. Dazu ist es nicht nötig, ein Klebemittel aufzubringen oder einzubringen. Auch der Einsatz eines Zweikomponentenklebstoffs ist nicht erforderlich, um die Verbindungssicherheit zu gewährleisten. Da regelmäßig kein Klebstoff oder kein Klebemittel eingesetzt wird, kann bei Bedarf jederzeit die Speichenspannung korrekt angepasst (erhöht oder erniedrigt) werden, ohne Auswirkung auf die Stabilität oder die Zuverlässigkeit.

Insbesondere wird auch eine leichte und einfach zu fertigende Laufradkomponente zur Verfügung gestellt, die hoch belastbar ist.

Die einstückig mit dem Mittelstück ausgebildeten Endstücke ermöglichen eine hohe Belastbarkeit und verhindern Setzungserscheinungen, die bei mehrteiligen Speichen auftreten können. Das kann die Speichenspannung und die Zentrierung eines Laufrades negativ beeinflussen. Bei der Erfindung wird das verhindert.

Die Speiche kann im Wesentlichen durch Pultrusion hergestellt werden, wobei dann an das Mittelstück die Endstücke oder Teile davon angespritzt werden, während das Matrixmaterial des Mittelstücks noch flüssig ist oder nachdem es wieder teilflüssig oder flüssig gemacht wurde. Dadurch entsteht eine (insbesondere fugenlose und) einstückige Laufradkomponente, bei der auch im Inneren der Speiche keine Verklebungen, Klebeschichten oder trennende Grenzschichten vorliegen. Es entsteht eine stoffschlüssige Verbindung. Es ist denkbar, dass mikroskopisch gesehen Grenzschichten oder doch eher Grenzbereiche erkennbar sind. Aber jedenfalls ist keine separate Zwischenschicht wie eine Klebeschicht vorhanden. Es ist in einem Schnitt eine Änderung von einem Material der Verstärkungselemente und/oder von der Größe und der Größenverteilung der Verstärkungselemente erkennbar. In einfachen Fällen, ändert sich das Fasermaterial und/oder die Faserdimension und in der Matrix ist vorzugsweise keine Grenzschicht und/oder kein Übergang erkennbar.

Die Speiche weist insbesondere einen gerade ausgebildeten und langgestreckten Speichenkörper auf, der ein Mittelstück und an dessen zwei gegenüberliegenden und voneinander entfernten Enden einstückig damit ausgebildete Endstücke umfasst sind. Die Speiche ist insbesondere gerade ausgebildet und weist keine Kröpfung auf.

Der Speichenkörper weist vorzugsweise keine Durchgangslöcher oder Vertiefungen auf, an denen andere Teile eingehakt werden können.

Die Oberfläche der Verbindungselemente ist abgesehen von den Gewinden vorzugsweise glatt ausgebildet und verfügt über keine Haken und Ösen.

Als Langfasern werden in den Verbindungselementen lange Verstärkungsfasern und zum Beispiel Endlosfasern eingesetzt, die beispielsweise nach einer bzw. der Pultrusion entsprechend auf die Länge der Speiche abgeschnitten werden. Prägnant gesagt, können im Rahmen dieser Anmeldung lange Verstärkungsfasern auch Langfasern (oder "Endlosfasern") genannt werden. "Endlosfasern", weil sie bei der Herstellung endlos waren und/oder weil sie sich von einem Ende der Speiche zum anderen Ende erstrecken.

In einer bevorzugten Ausgestaltung weist wenigstens ein Endstück einen größeren Außendurchmesser auf als wenigstens eine Querabmessung in dem Mittelstück. Insbesondere ist wenigstens ein Außendurchmesser eines Endstücks größer als eine minimale Querabmessung und/oder eine mittlere Querabmessung und/oder eine maximale Querabmessung in dem Mittelstück.

Dabei wird unter einer Querabmessung eine quer bzw. senkrecht zur Längsachse oder Symmetrieachse der Speiche ausgerichtete Abmessung verstanden. In einfachen Ausgestaltungen kann die Querabmessung der Durchmesser in einem zentralen Bereich des Mittelstücks sein.

In einer bevorzugten Ausführungsform weist wenigstens ein Endstück und insbesondere wenigstens der Kopfabschnitt einen (unmittelbar oder auch mittelbar) an das Mittelstück der Speiche angrenzenden Verdickungsabschnitt und einen sich wiederum daran anschließenden Stützabschnitt auf. Der einstückig mit dem gesamten Speichenkörper gefertigte Verdickungsabschnitt sorgt zusammen mit dem Stützabschnitt für eine zuverlässige Abstützung der Speiche. In dem Verdickungsabschnitt erweitert sich wenigstens eine Abmessung der Speiche quer zur Längsrichtung der Speiche. In allen Ausgestaltungen kann der Verdickungsabschnitt konusartig ausgestaltet sein. Der Verdickungsabschnitt kann dann auch als Konusabschnitt bezeichnet werden.

Dieser Verdickungsabschnitt oder auch Konusabschnitt kann auch eine Funktion zum Halten der Speiche beim Laufradbau haben, sodass an der Speiche keine Schäden durch Verdrehung auftreten.

Vorzugsweise weist wenigstens eines der Endstücke einen Gewindeabschnitt (mit dem Gewinde) zur Verschraubung mit einem Speichennippel auf. Vorzugsweise weist wenigstens eines der Endstücke einen Kopfabschnitt zur Abstützung der Speiche auf. Es ist möglich und besonders bevorzugt, dass eines der Endstücke einen Kopfabschnitt zur Abstützung der Speiche und das andere Endstück einen Gewindeabschnitt zur Verschraubung mit einem Speichennippel umfasst. Möglich ist es aber auch, dass an beiden Enden Kopfabschnitte ausgebildet sind. Oder dass an beiden Enden Gewindeabschnitte ausgebildet sind.

Möglich ist es auch, dass an beiden Enden ein Kopfabschnitt mit einem daran ausgebildeten Gewindeabschnitt umfasst ist. Dann kann z.B. an beiden Ende eine Verdickung als Kopfabschnitt umfasst sein, wobei an dem Kopfabschnitt ein (z. B. zylindrischer) Gewindeabschnitt ausgebildet ist. Das ermöglicht eine flexible Verwendung.

In vorteilhaften Weiterbildungen umfasst wenigstens ein Endstück einen Querschnittsbereich mit darin eingebetteten Langfasern als Verstärkungselementen und wenigstens einen Querschnittsabschnitt mit darin eingebetteten kürzeren Verstärkungselementen. Dabei sind die kürzeren Verstärkungselemente kürzer ausgebildet als die längeren Verstärkungselemente bzw. Langfasern. Besonders bevorzugt sind die kürzeren Verstärkungselemente kürzer als 1/5 oder 1/10 der Länge der Langfasern. Die Länge der Langfasern entspricht insbesondere etwa bzw. im Wesentlichen der Speichenlänge bzw. der Länge eines Speichennippels und erreicht oder übersteigt wenigstens 90 % oder 95 % oder 99 % der Länge der Speiche bzw. des Speichennippels insgesamt. Bevorzugte Varianten von kürzeren Verstärkungselementen, die als Fasern ausgebildet sind, können im Rahmen dieser Anmeldung auch als Kurzfasern bezeichnet werden.

Es ist möglich, dass der Querschnittsabschnitt frei von Langfasern ausgebildet ist. Bevorzugt ist es, dass der Querschnittsabschnitt einen geringeren Anteil an Langfasern umfasst als der Querschnittsbereich. Besonders bevorzugt ist der Zentralbereich des Mittelstücks ein Querschnittsbereich mit (ausschließlich) Langfasern als Verstärkungselementen. Da die Langfasern im Prinzip durch die gesamte Speiche verlaufen, gibt es auch an den Enden (im Zentrum oder darum herum) Langfasern.

Vorzugsweise wird wenigstens ein Teil der Verstärkungselemente durch Kurzfasern gebildet, die erheblich kürzer als die Langfasern ausgebildet sind.

Ein Querschnittsbereich kann auch als Langfaserbereich bezeichnet werden und ein Querschnittsabschnitt kann auch als Kurzfaserbereich bezeichnet werden. Unter Kurzfasern werden im Rahmen dieser Anmeldung insbesondere Verstärkungsfasern verstanden, die eine Länge zwischen 0,1 mm oder 0,2 mm und etwa 3 cm aufweisen. Besonders bevorzugt sind Kurzfasern kürzer als 10 mm.

Vorzugsweise weist ein erheblicher Teil des Querschnittsbereichs ausschließlich Langfasern als Verstärkungselementen auf.

Es ist in allen Ausgestaltungen auch möglich und bevorzugt, dass ein erheblicher Teil des Querschnittsabschnitts (oder der ganze Querschnittsabschnitt) keine Verstärkungselemente oder ausschließlich nur kürzere Verstärkungselemente (zum Beispiel in Form von Kurzfasern oder anderen Verstärkungselementen) aufweist.

In bevorzugten Ausgestaltungen wird wenigstens ein Teil der kürzeren Verstärkungselemente durch Faserschnipsel und/oder Verstärkungspartikel gebildet. Faserschnipsel sind insbesondere flächige Elemente. Verstärkungspartikel können Kugelelemente, Pulverpartikel oder auch unregelmäßige Partikel sein.

Es ist auch möglich, dass der Querschnittsabschnitt keine oder nur eine geringe Menge an Verstärkungselementen aufweist, sodass ein Gewichtsanteil an Verstärkungselementen in dem Querschnittsabschnitt viel geringer als ein Gewichtsanteil an Verstärkungselementen in dem Querschnittsbereich ist. Es kann eine geringere Menge an kürzeren Verstärkungselementen in dem Querschnittsbereich enthalten sein. Es kann auch sein, dass nahezu keine oder gar keine Verstärkungselemente in dem Querschnittsbereich vorhanden sind.

Vorzugsweise ist die flachere Gewindeflanke im montierten Zustand jeweils in Zugrichtung ausgerichtet und bildet eine tragende Flanke (bzw. die tragende Flanke des Gewindes). Insbesondere weist die flachere Gewindeflanke einen Winkel von weniger als 10° oder weniger als 8° senkrecht zur Längsrichtung auf. Die steilere Gewindeflanke weist insbesondere einen Winkel von größer als 20° oder 25° senkrecht zur Längsrichtung auf und bildet eine nichttragende Flanke. Insbesondere weist die steilere Gewindeflanke einen Winkel von kleiner als 60° oder 50° senkrecht zur Längsrichtung auf. Ein Flankenwinkel zwischen den Gewindeflanken beträgt vorzugsweise zwischen 25° und 60°.

Im Unterschied zu Spitz-, Rund- oder Trapezgewinden, die in der Regel alle symmetrisch ausgebildete Gewindeprofile aufweisen, sind bei dem erfindungsgemäßen Speichensystem die miteinander zusammenwirkenden Gewinde (-abschnitte) asymmetrisch ausgebildet und die Winkel der beiden Gewindeflanken sind nicht identisch, sondern deutlich unterschiedlich.

Damit werden tragende und nichttragende Flanken bereitgestellt und es ergeben sich für den Flankenwinkel zwei verschiedene Werte, nämlich jeweils unterschiedliche Winkel zwischen der Gewindeflanke und einer senkrecht auf der axialen Richtung stehenden Linie. Der Flankenwinkel des Sägengewindes ergibt sich dann aus diesen beiden Werten. Beispielsweise kann eine Art von metrischen Sägengewinde eingesetzt werden, bei dem der Winkel an der tragenden Gewindeflanke 3° und der Winkel an der nichttragenden Gewindeflanke 30° beträgt. Der Flankenwinkel zwischen beiden Gewindeflanken beträgt dann (etwa) 33°. Das ist in Anlehnung an die DIN 513-1 bis DIN 513-3, wo aber größere Durchmesser von 10 mm bis 640 mm definiert werden und nicht so kleine Gewindeabmessungen, wie sie hier verwendet werden.

Möglich ist es auch, die Gewinde in Anlehnung an ein amerikanisches ANSI-Sägengewinde auszugestalten. Dann kann der Winkel an der nichttragenden Flanke 45° und an der tragenden Flanke 7° betragen.

Durch eine solche Konstruktion können gerade einseitige Belastungen gut abgeleitet werden. Die tragende Gewindeflanke steht etwa senkrecht auf der axialen Richtung und kann damit in axialer Richtung die bei Speichensystemen recht hohen dynamischen Kräfte ableiten.

Ein in einem erfindungsgemäßen Speichensystem eingesetztes oder verwendetes Gewinde kann insbesondere als eine Art von Sägengewinde ausgebildet sein. Oder ein Gewinde in dem Speichensystem ist in Anlehnung an solche Gewinde ausgebildet. In den meisten bekannten Einsatzgebieten werden Sägengewinde regelmäßig erst ab Durchmessern von 10 mm eingesetzt. Demgegenüber haben Speichen oder Speichennippel regelmäßig viel kleinere (Quer-) Abmessungen oder Durchmesser.

In allen Ausgestaltungen ist es besonders bevorzugt, dass ein maximaler Gewindedurchmesser eines Außengewindes (einer Speicheneinheit bzw. eines Verbindungselementes) kleiner als 8 mm und vorzugsweise kleiner 5 mm beträgt. Insbesondere ist ein minimaler Gewindedurchmesser eines Innengewindes größer 1 mm oder größer 1,5 mm oder größer 2 mm. Der maximale Gewindedurchmesser entspricht dabei insbesondere dem äußeren Gewindedurchmesser und der minimale Gewindedurchmesser eines Innengewindes dem lichten Innendurchmesser.

Besonders bevorzugt beträgt eine Gewindesteigung (eines Innen- und eines Außengewindes) zwischen 0,3 mm und 0,9 mm.

Ein Durchmesserunterschied von einem maximalen Gewindedurchmesser zu einem minimalen Gewindedurchmesser (desselben Gewindes) beträgt vorzugsweise zwischen 0,5 mm und 1,5 mm.

In allen Ausgestaltungen ist es möglich und auch bevorzugt, dass der Speichennippel wenigstens teilweise aus (wenigstens) einem Metall besteht. Der Speichennippel als Verbindungselement kann auch überwiegend oder nahezu vollständig oder vollständig aus Metall bestehen, beispielsweise aus einem Leichtmetall.

Die Endstücke der Speiche sind insbesondere einstückig mit dem Mittelstück ausgebildet und bilden jeweils ein Ende der Speiche. Wenigstens einige der Verstärkungselemente sind insbesondere als Langfasern ausgebildet und erstrecken sich vollständig durch das Mittelstück und jeweils über wenigstens einen wesentlichen Teil beider Endstücke der Speiche.

In besonders bevorzugten Ausgestaltungen umfasst der Querschnittsabschnitt das gleiche Matrixmaterial wie der Querschnittsbereich. Das bedeutet insbesondere, dass in dem Kurzfaserbereich und in dem Langfaserbereich das gleiche oder sogar dasselbe Matrixmaterial eingesetzt wird. Das bedeutet dann, dass das Matrixmaterial der Speiche insgesamt vorzugsweise einheitlich ist.

So kann in der ganzen Speiche und dem ganzen Speichennippel das gleiche Matrixmaterial bzw. der gleiche Materialtyp des Matrixmaterials eingesetzt werden. Bevorzugt wird wenigstens ein artgleiches Matrixmaterial eingesetzt, welches eine stoffschlüssige Verbindung eingeht. Eine Grenzschicht ist besonders bevorzugt auch in einem Schliffbild nicht erkennbar. Gegebenenfalls ist es auch möglich, dass leicht unterschiedliche Matrixmaterialien verwendet werden. Es ist besonders bevorzugt, dass die Grundbestandteile des Matrixmaterials identisch sind.

Es ist besonders bevorzugt, dass das Material der Verstärkungselemente der Speiche und/oder des Speichennippels insgesamt einheitlich ist. Dabei ist es aber möglich und bevorzugt, dass sich das Material der Verstärkungselemente in dem Querschnittsabschnitt von dem Material der Verstärkungselemente in dem Querschnittsbereich wenigstens teilweise unterscheidet. Dabei bestehen die Unterschiede dann nicht nur in Form und Größe, sondern auch in der Art und Zusammensetzung des verwendeten Materials. Dabei kann insbesondere wenigstens ein Teil der kürzeren Verstärkungselemente aus einem anderen Material als die Langfasern bestehen. So können beispielsweise Kohle- oder Carbonfasern für die Langfasern eingesetzt werden, während Glasfasern als Kurzfasern oder Glaspartikel zum Beispiel in dem Bereich eines Gewindes eingesetzt werden. Bevorzugt umfasst wenigstens ein Teil der kürzeren Verstärkungselemente Glasfasermaterial.

In besonders bevorzugten Ausgestaltungen ist die Speiche und/oder der Speichennippel werkstoffeinstückig ausgebildet. Besonders bevorzugt finden sich in dem Volumen des Speichenkörpers keine konkreten Materialgrenzflächen, wie sie zum Beispiel beim Verkleben oder auch beim Verschweißen von zwei separaten Werkstücken auftreten.

Vorzugsweise weist der Querschnittsbereich (Langfaserbereich) in wenigstens einem Endabschnitt einen von einem rotationssymmetrischen Querschnitt abweichenden Querschnitt auf. So ist es bevorzugt, dass eine Umhüllende der Langfasern in dem Querschnittsbereich einen von einem rotationssymmetrischen Querschnitt abweichenden Querschnitt aufweist. Dabei wird unter einer "Umhüllenden" eine "Hüllkurve" oder eine (virtuelle) Form verstanden. Eine "Hüllkurve" umschließt den Querschnittsbereich, der die Verstärkungselemente bzw. Langfasern enthält. Die dreidimensionale Form des Querschnittsbereichs wird durch die Lage der Verstärkungselemente bzw. Langfasern insgesamt definiert. Die "Hüllkurve" umschließt die Verstärkungselemente möglichst eng. Die Hüllkurve verdeutlicht nur die Struktur, ist aber keine reale Schicht.

In allen Weiterbildungen und Ausgestaltungen ist es bevorzugt, dass der abweichende Querschnitt eine Form aufweist, welche aus einer Gruppe von Formen entnommen ist, welche (näherungsweise) eine mehreckige, sternförmige, ovale, elliptische oder kegel- oder T- oder L- oder H-förmige Form umfasst, wobei die Ecken abgerundet sein können. Durch solche Ausgestaltungen wird die Übertragung eines höheren Drehmoments zuverlässig gewährleistet, welches gegebenenfalls beim Befestigen oder Justieren der Speiche auftritt.

Besonders bevorzugt bleibt eine Gesamtfläche des Querschnittbereichs gleich, wobei sich die Form beim Übergang zu dem abweichenden Querschnitt ändert.

Dazu wird das Mittelstück (wenigstens) an seinen Enden aufgeheizt und in bevorzugten Ausgestaltungen wird wenigstens ein Ende umgeformt. Das Ende des Mittelstücks wird dann z.B. von einem aerodynamischen Querschnitt in einen runden, eckigen, sternförmigen oder auch ovalen Querschnitt oder dergleichen umgeformt, um einen stärken Halt der Speiche zu ermöglichen.

Dabei werden die in dem Querschnittbereich enthaltenen Langfasern auch in die neue abweichende Querschnittsform gedrückt bzw. verbracht. Um diese (gegebenenfalls komplexe) geometrische Form wird dann das Endstück einstückig angeformt.

Dabei kann eine Umhüllende der Langfasern in dem Mittelstück eine erste Form aufweisen. In einfachen Fällen eine runde Querschnittsform. In anderen bevorzugten Fällen z.B. eine aerodynamische und z.B. etwa ovale Querschnittsform, die den Querschnittsbereich in dem Mittelstück bildet.

In dem fertigen Endstück kann eine Umhüllende der Langfasern (der Querschnittsbereich mit einem abweichenden Querschnitt) eine zweite Form aufweisen, die von der ersten Form erheblich abweicht. Z.B. kann die zweite Form in einem Querschnitt an dem Endstück eine größte Längserstreckung aufweisen, die quer oder senkrecht zu einer größten Längserstreckung in einem Querschnitt an dem Mittelstück ausgerichtet ist.

Dabei bleibt eine Querschnittsfläche der Umhüllenden in beiden Querschnitten insbesondere (nahezu) gleich. Das Volumen des Querschnittsbereichs wird an dem Endstück umgeformt. Anders gesagt, verbleibt eine Querschnittsfläche der Langfasern in dem Endstück gleich groß wie in dem Mittelstück, aber die Form einer Umhüllenden bzw. die äußere Form des Querschnittsbereichs ändert sich in dem Endstück.

Liegt z.B. eine ovale oder auch runde Fläche des Querschnittsbereichs in dem Mittelstück vor und wird diese an dem Endstück umgeformt und oval und quer dazu ausgerichtet, steigert das die axiale Belastbarkeit der Speiche.

Es kann sich ein von dem Mittelstück in das Endstück hinein ein Querschnittsverlauf bei gleichbleibender Querschnittsfläche von einer horizontalen Ellipse zu einer vertikalen Eklipse ändern, wodurch die Zugfestigkeit des Speichenkörpers verbessert wird.

Generell werden bei der Montage von Speichensystemen in einem Laufrad die Speichen unter eine derartige Zugspannung gesetzt, dass im regelmäßigen Betrieb bei allen auftretenden Belastungen immer eine erhebliche Zugspannung innerhalb der Speiche vorliegt.

In einer Ausgestaltung ist vorzugsweise der Querschnittsabschnitt zentrisch in dem Endstück aufgenommen und weist einen konusähnlichen Abschnitt auf. Dann ist es möglich, dass in dem Endstück Langfasern den konusähnlichen Abschnitt ringsum umgeben.

Vorzugsweise umgibt der Querschnittsabschnitt den Querschnittsbereich (Langfaserbereich) radial und der Querschnittsabschnitt bildet eine Verdickung an dem Endstück.

Besonders bevorzugt ist an dem Querschnittsabschnitt (mit kürzeren Verstärkungselementen) der Gewindeabschnitt ausgebildet.

Besonders bevorzugt erstrecken sich die Langfasern durch einen Zentralbereich des Mittelabschnitts und wenigstens einen Zentralbereich eines Endstücks. Das Endstück kann mit dem Gewindeabschnitt einen Zentralbereich umfassen, durch den sich die Langfasern erstrecken und einen Ringbereich, in dem das Gewinde angeformt ist und in dem kürzere Verstärkungselemente (oder gegebenenfalls gar keine Verstärkungselemente) eingebracht sind.

Vorzugsweise wird in dem Querschnittsbereich ein insbesondere durch thermische Einwirkung reversibel umformbares Matrixmaterial eingesetzt. Besonders bevorzugt ist in dem Speichenkörper insgesamt ein reversibel umformbares Matrixmaterial umfasst.

In allen Ausgestaltungen ist es besonders bevorzugt, dass in dem Querschnittsbereich ein thermoplastisches Matrixmaterial umfasst ist. Besonders bevorzugt ist in dem Speichenkörper insgesamt ein thermoplastisches Matrixmaterial umfasst. Besonders bevorzugt wird (nur) wenigstens ein thermoplastisches Matrixmaterial als Matrixmaterial in dem Speichenkörper verwendet.

Eine weitere erfindungsgemäße Laufradkomponente für ein Fahrzeug und insbesondere für Fahrräder umfasst ein im Betrieb auf Zug belastetes und als Speiche ausgebildetes Verbindungselement eines Speichensystems. Die Speiche erstreckt sich in axialer Richtung und umfasst ein Mittelstück und zwei Endstücke, um die Speiche mittels der Endstücke lösbar mit einer Nabe und mit einer Felge zu verbinden. Die Speiche ist aus einem Faserverbundwerkstoff gefertigt und umfasst wenigstens ein Matrixmaterial und darin eingebettete Verstärkungselemente. Wenigstens ein Endstück der Speiche weist ein Gewinde auf, um die Speiche mit einem Gewinde eines anderen Verbindungselement zu verbinden. Das Gewinde der Speiche ist in axialer Richtung unsymmetrisch ausgebildet, sodass jeweils eine Gewindeflanke erheblich flacher als die andere steilere Gewindeflanke ausgebildet ist. Die Endstücke sind einstückig mit dem Mittelstück ausgebildet sind und bilden jeweils ein Ende der Speiche. Wenigstens einige der Verstärkungselemente sind als Langfasern ausgebildet und erstrecken sich in einem Querschnittsbereich vollständig durch das Mittelstück und jeweils über wenigstens einen wesentlichen Teil beider Endstücke.

Die Anmelderin behält sich vor, eine Laufradkomponente für ein Fahrzeug und insbesondere für Fahrräder zu beanspruchen, wobei die Laufradkomponente ein als Speichennippel ausgebildetes Verbindungselement eines Speichensystems umfasst. Das Speichensystem ist dazu vorgesehen, eine Nabe mit einer Felge lösbar zu verbinden. Der Speichennippel weist ein Gewinde auf, um den Speichennippel mit einer Speiche zu verbinden/verbinden zu können. Das Gewinde des Verbindungselementes ist in axialer Richtung unsymmetrisch ausgebildet, sodass jeweils eine Gewindeflanke erheblich flacher als die andere steilere Gewindeflanke ausgebildet ist. Dabei ist der Speichennippel aus einem Faserverbundwerkstoff gefertigt und umfasst wenigstens ein Matrixmaterial und darin eingebettete Verstärkungselemente.

Es ist bevorzugt, dass wenigstens einige der Verstärkungselemente als Langfasern ausgebildet sind. Vorzugsweise erstrecken sich die Langfasern im Wesentlichen vollständig ("endlos") durch einen Nippelkörper des Speichennippels. Dabei können an den Enden des Nippelkörpers z.B. Abdeckungen oder Deckschichten aufgebracht sein. Dann sind Fasern (Langfasern) an den Enden nicht sichtbar.

Eine weitere erfindungsgemäße Laufradkomponente eines Fahrzeugs und insbesondere Fahrrads ist insbesondere für einen bestimmungsgemäßen Normalbetrieb oder Regelbetrieb von wenigstens teilweise muskelbetriebenes Zwei- oder Mehrrädern vorgesehen und umfasst eine Felge und eine Nabe und mehrere Speichensysteme, wobei ein Speichensystem (wenigstens) zwei miteinander zusammenwirkende Verbindungselemente umfasst, nämlich ein (im Betrieb auf Zug belastetes und) als Speiche ausgebildetes Verbindungselement und wenigstens ein als Speichennippel ausgebildetes Verbindungselement, wobei sich die Speiche in axialer Richtung erstreckt und insbesondere separat und gerade ausgebildet ist. Wenigstens eine Speiche umfasst ein Mittelstück und zwei gegenüberliegende und voneinander entfernte Endstücke. Über die Endstücke ist die Nabe mit der Felge über die Speichen und wenigstens einen Speichennippel lösbar verbunden. Der Speichennippel und wenigstens ein Endstück der Speiche weisen miteinander zusammenwirkende Gewinde auf, um die Speiche und den Speichennippel miteinander zu verbinden, wobei eines der Gewinde als Innengewinde und eines der Gewinde als Außengewinde ausgebildet ist. Die miteinander zusammenwirkenden Gewinde der Verbindungselemente sind in axialer Richtung jeweils unsymmetrisch ausgebildet, sodass jeweils eine Gewindeflanke erheblich flacher als die andere steilere Gewindeflanke ausgebildet ist. Die Speiche bzw. der Speichenkörper der Speiche ist aus wenigstens einem Faserverbundwerkstoff gefertigt und umfasst wenigstens ein Matrixmaterial und darin eingebettete Verstärkungselemente. Die Endstücke sind einstückig mit dem Mittelstück ausgebildet und bilden jeweils ein Ende der Speiche aus. Wenigstens einige der Verstärkungselemente sind als Langfasern (lange Verstärkungsfasern) ausgebildet und erstrecken sich vollständig durch das Mittelstück und jeweils über wenigstens einen wesentlichen Teil beider Endstücke.

Auch diese erfindungsgemäße Laufradkomponente hat viele Vorteile.

Die Speichennippel können aus einem Faserverbundmaterial oder wenigstens teilweise oder auch vollständig aus einem Metall bestehen oder gefertigt sein. Ein Speichennippel ist vorzugsweise auch aus wenigstens einem Faserverbundwerkstoff gefertigt und umfasst insbesondere wenigstens ein Matrixmaterial und darin eingebettete Verstärkungselemente. Bei der Speiche sind die Endstücke insbesondere einstückig mit dem Mittelstück ausgebildet und bilden jeweils ein Ende der Speiche.

Vorzugsweise ist das Mittelstück der Speiche nach spezifischem Einsatzgebiet geformt. In bevorzugten Ausgestaltungen ist das Mittelstück der Speiche aerodynamisch geformt. Das ermöglicht einen geringeren Luftwiderstand bei geringem Gewicht. Vorzugsweise ist das Endstück in der Speiche wenigstens nahezu vollständig oder vollständig innerhalb der Felge aufgenommen. Das ermöglicht eine besonders vorteilhafte Ausgestaltung, bei der das aerodynamische Mittelstück sich bis an die Felge heran erstreckt. Ein Übergangsbereich ist dann nicht nötig. Da gerade im radial äußersten Bereich der Speiche an der Felge die größten Relativgeschwindigkeiten zur Umgebung auftreten, ist eine aerodynamische Ausgestaltung dort besonders vorteilhaft. Das wird durch die Erfindung ermöglicht.

Vorzugsweise wird wenigstens ein Speichennippel aus Faserverbundwerkstoff eingesetzt und mit der Speiche verschraubt. Besonders bevorzugt sind alle Speichen und alle Speichennippel aus Faserverbundwerkstoff gefertigt.

Besonders bevorzugt umfasst das Material der Felge und auch das Material des Gehäuses der Nabe Faserverbundwerkstoff und/oder Metall.

Weitere Vorteile ergeben sich aus den Ausführungsbeispielen, die im Folgenden mit Bezug auf die beiliegenden Figuren erläutert werden.

In den Figuren zeigen:
- Figur 1: eine schematische Darstellung eines Rennrades;
- Figur 2: eine schematische Darstellung eines Mountainbikes;
- Figuren 3a-3: dschematische Darstellungen von Verbindungselementen von anmeldungsgemäßen Speichensystemen;
- Figur 4: eine schematische Schnittansicht einer Speiche eines anmeldungsgemäßen Speichensystems;
- Figuren 5a-5c: schematische Darstellungen von Verbindungselementen von anmeldungsgemäßen Speichensystemen;
- Figuren 6a-10: schematische Darstellungen von Speichen von anmeldungsgemäßen Speichensystemen;
- Figuren 11a-c: schematische Darstellungen von Speichennippeln von anmeldungsgemäßen Speichensystemen; und
- Figur 12: eine schematische Ansicht eines Speichennippels.

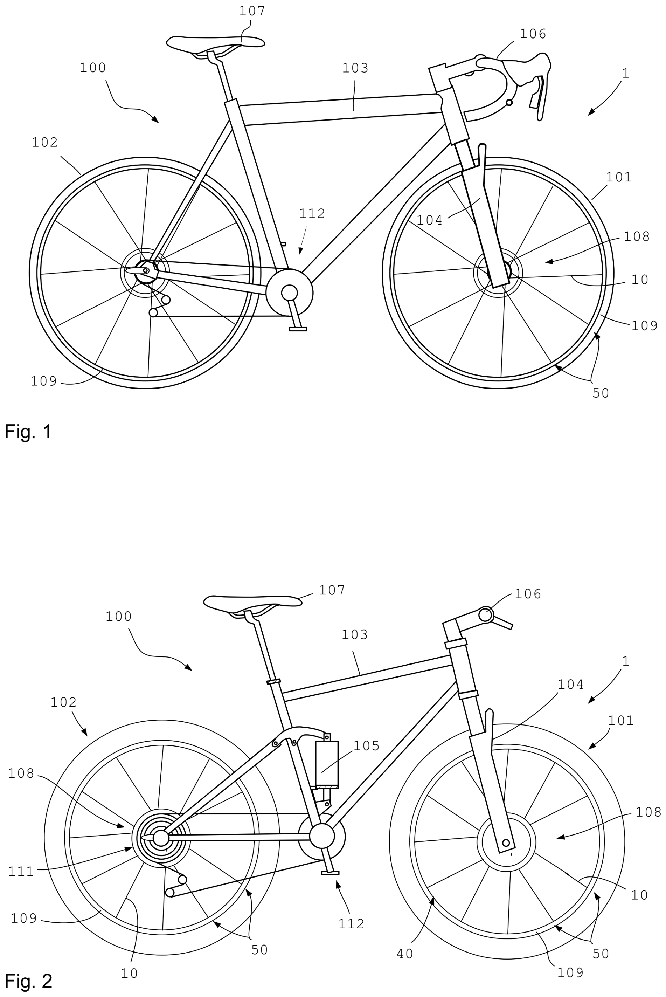

In den Figuren 1 und 2 sind jeweils ein Mountainbike bzw. ein Gravel-Fahrrad oder Rennrad 100 dargestellt, die jeweils mit erfindungsgemäßen Laufradkomponenten 1 mit Speichensystemen 40 ausgerüstet sind. Das Mountainbike bzw. Rennrad 100 verfügt jeweils über ein Vorderrad 101 und ein Hinterrad 102.

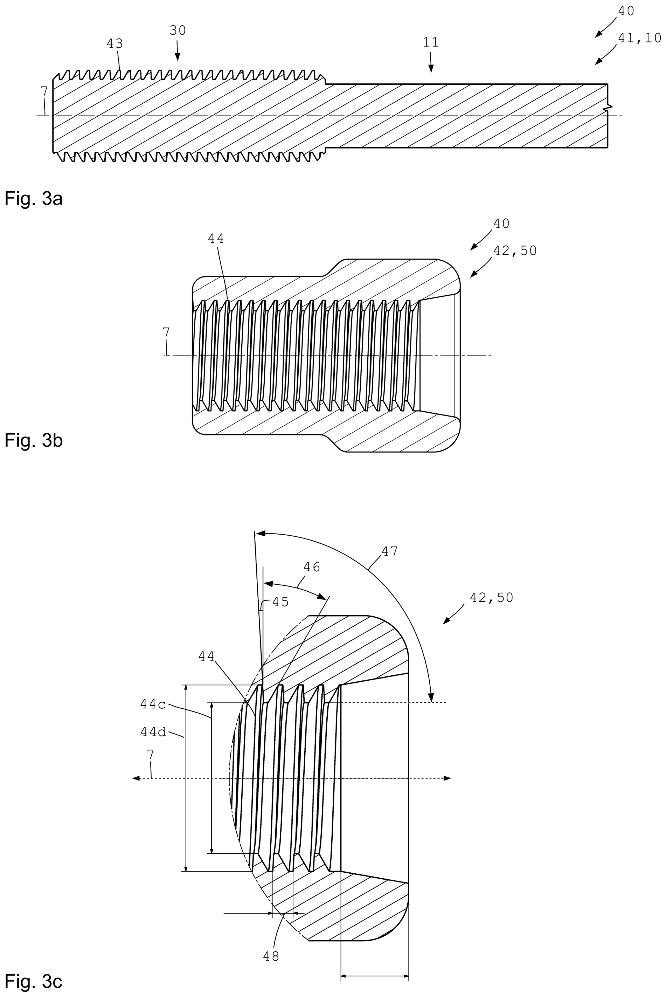

Die beiden Räder 101, 102 verfügen über Speichen 10 als Verbindungselemente 41, die mit Speichennippeln 50 als Verbindungselementen 42 zusammenwirken (vgl. Fig. 3a-3b). Eine Ritzeleinrichtung 111 ist vorgesehen. Grundsätzlich können konventionelle Felgenbremsen oder auch andere Bremsen wie zum Beispiel Scheibenbremsen vorgesehen sein.

Die Fahrräder 100 verfügen jeweils über einen Rahmen 103, einen Lenker 106, einen Sattel 107, eine Gabel bzw. eine Federgabel 104 und im Falle des Mountainbikes oder einem Rennrad oder Gravel-Fahrrad (Gravelbike) kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe der Räder kann jeweils über eine Spanneinrichtung wie zum Beispiel eine Steckachse oder einen Schnellspanner an dem Rahmen befestigt sein.

In den Figuren 1 und 2 sind anmeldungsgemäße Laufradkomponente 1 mit Speichen 10 und Speichennippeln 50 zu erkennen. Die Speichen verbinden die Nabe 108 mit der Felge 109. Hier sind die Speichennippel 50 im Innenraum der Hohlkammerfelge 109 aufgenommen, sodass sie in der Seitenansicht nicht sichtbar sind.

In den Figuren 3a bis 12 sind unterschiedliche anmeldungsgemäße Laufradkomponenten 1 abgebildet. Eine Laufradkomponente 1 verfügt über Speichensysteme 40 mit Speichen 10 und Speichennippeln 50.

In Figur 3a ist eine Draufsicht auf eine Speiche 10 eines Speichensystems 40 dargestellt. Die Speiche 10 verfügt über ein Mittelstück 11 und erstreckt sich gerade in axialer Richtung 7. Das hier sichtbare Endstück 30 verfügt über ein Außengewinde 43. Der Endabschnitt weist hier einen größeren Außendurchmesser als das Mittelstück 11 auf.

Figur 3b zeigt einen schematischen Querschnitt durch einen Speichennippel 50 als Verbindungselement 42 des Speichensystems 40 in einem Querschnitt, wobei das Gewinde 44 im Inneren und der verdickte Endbereich zu erkennen ist, mit dem sich der Speichennippel 50 im Inneren einer Felge abstützt. Hier stützt sich der Nippel mit dem verdickten Endbereich am rechten Ende Ende ab.

Figur 3c zeigt das vergrößerte Detail "E" aus Fig. 3b. Erkennbar ist, dass der Speichennippel 50 ein in axialer Richtung 7 asymmetrisches Innengewinde 44 aufweist, bei welchem die Gewindeflanken nicht symmetrisch zu einer Querrichtung senkrecht zu der axialen Richtung 7 ausgebildet sind. Die Gewindeflanke 44a ist erheblich flacher und ist zur Querrichtung unter einem Winkel von 0° (+/- 10°) ausgerichtet. Die Gewindeflanke 44b ist erheblich steiler und ist hier zur Querrichtung unter einem Winkel von etwa 30° (+/- 5°) ausgerichtet. Das Gewinde 44 verfügt über eine Gewindesteigung von etwa 0,45 mm (+/- 0,2 mm) und hat einen lichten Innendurchmesser von hier etwa 3,3 mm (+/- 0,2 mm). Der maximale Durchmesser des Gewindes beträgt hier 4,13 mm (+/-0,2 mm). Der Außendurchmesser des Speichennippels 50 liegt zwischen etwa 6 mm und 9 mm.

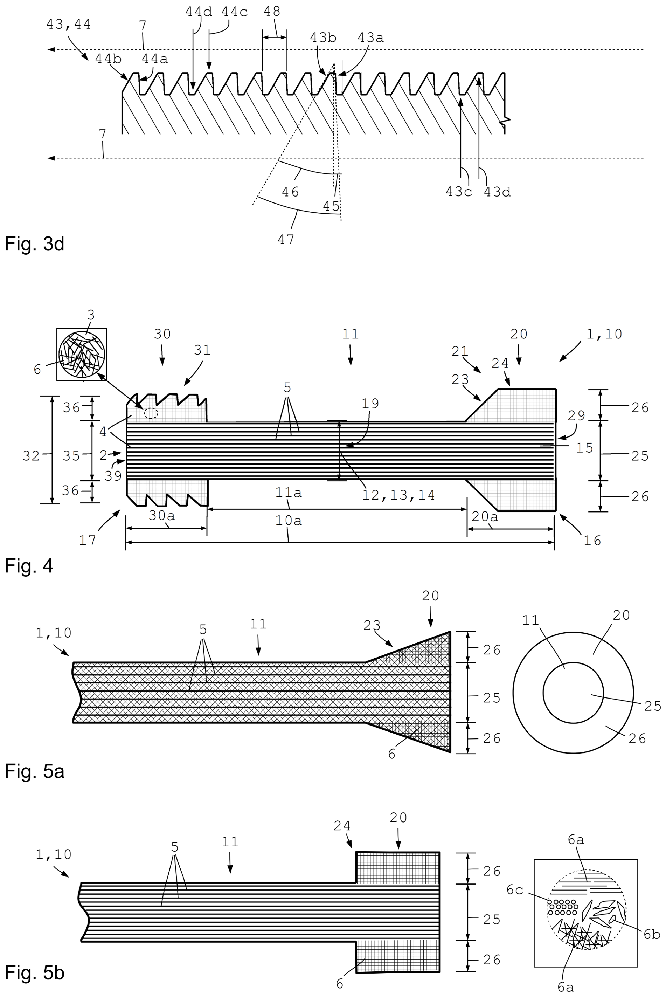

Figur 3d zeigt noch einmal vergrößert eine schematische Darstellung des Gewindes. Im Grundsatz gilt die Darstellung sowohl für ein Außengewinde 43 als auch ein Innengewinde, da beide miteinander zusammenwirken und insofern aufeinander abgestimmt sein müssen.

Für ein Außengewinde 43 kann die untere eingezeichnete Mittellinie 7 gelten. Dann ragt das Gewinde nach oben und es ergibt sich eine flachere Gewindeflanke 43a und eine steilere Gewindeflanke 43b. Die Gewindeflanke 43a ist fast senkrecht zur axialen Richtung 7 ausgerichtet und kann hohe Kräfte ableiten. Das Gewinde ist selbsthemmend ausgestaltet. Der Winkel 45 ist viel kleiner (flacher) als der Winkel 46. Der Winkel 47 setzt sich hier aus den Winkeln 45 und 46 zusammen. Das Außengewinde 43 weist einen minimalen (Außen-) Durchmesser 43c und einen maximalen (Außen-) Durchmesser 43d auf.

Die Gewindesteigung 48 ist für zusammenwirkende Außengewinde 43 und Innengewinde 44 identisch.

Die Fig. 3d zeigt schematisch auch ein Innengewinde eines Speichennippels. Dann stellt die eingezeichnete obere Linie 7 die Symmetrieachse dar. Das Gewinde (nicht schraffiert) ragt dann nach innen und es ergeben sich Gewindeflanken 44a (flacher) und 44b (steiler). Auch hier kann das Gewinde hohe Axialkräfte ableiten. Das Innengewinde 44 weist einen minimalen (Innen-) Durchmesser 44c und einen maximalen (Innen-) Durchmesser 44d auf.

In Figur 4 ist ein Querschnitt durch eine Speiche 10 dargestellt, die ein langgestrecktes Mittelstück 11 und zwei Endstücke 20, 30 aufweist. Die Speiche 10 ist insgesamt einstückig ausgearbeitet und der Speichenkörper 15 weist keinerlei Trennflächen zwischen den Endstücken 20, 30 und dem Mittelstück 11 auf.

Die Speiche 10 besteht hier aus einem Faserverbundwerkstoff 2 und umfasst ein Matrixmaterial 3 und Verstärkungselemente 4. Dabei erstrecken sich Langfasern 5 (wenigstens nahezu) vollständig über die Länge 10a der Speiche 10 zentrisch durch das Endstück 30, das Mittelstück 11 und das Endstück 20 am anderen Ende der Speiche 10. Ganz am Ende können die Langfasern 5 abgedeckt sein, sodass sie dann von außen nicht erkennbar sind.

Es sei darauf hingewiesen, dass in den Figuren 4-12 die Laufradkomponente 1 bzw. die Verbindungselemente 41, 42 nicht maßstäblich dargestellt sind, um die einzelnen Teile und Komponenten des Speichensystems 40 deutlicher zeigen zu können. In Realität weist die Speiche 10 aus Fig. 4 eine Länge 10a von zum Beispiel 290 mm oder 300 mm auf und kann, wenn sie nicht aerodynamisch ausgebildet ist, beispielsweise einen Durchmesser zwischen 1 mm und 3 mm oder 4 mm aufweisen. Auch andere Abmessungen sind möglich. Diese Abmessungen werden hier auch angegeben, um zu verdeutlichen, dass die Abbildungen nicht maßstabsgetreu dargestellt sind.

In Figur 4 ist zu erkennen, dass das Endstück 30 über einen Gewindeabschnitt 31 verfügt, welcher als Außengewinde 43 ausgebildet ist und sich hier über die vollständige Breite bzw. Länge 30a des Endstücks 30 erstreckt. Das Gewinde ist analog ausgestaltet, wie es in Fig. 3d zu sehen ist. Das andere Endstück 20 verfügt über einen Verdickungsabschnitt 23, der an das Mittelstück 11 angrenzt und über einen Stütz- oder Zylinderabschnitt 24, der sich an den Verdickungsabschnitt 23 anschließt und bis zum Ende der Speiche reicht.

In einfachen Ausgestaltungen ist das Mittelstück 11 wenigstens in dem Zentralbereich 19 rund ausgebildet, sodass die minimale Querabmessung 12, die mittlere Querabmessung 13 und die maximale Querabmessung 14 jeweils einen gleichen Wert aufweisen und hier dem Durchmesser des Mittelstücks 11 entsprechen. In anderen Ausgestaltungen kann die Speiche 10 z.B. aerodynamisch ausgebildet sein, sodass sich die minimale, mittlere und maximale Querabmessung 12-14 jeweils voneinander unterscheidet.

Über die vollständige Länge 10a der Speiche 10 erstrecken sich die Langfasern 5 als Verstärkungselemente 4. Dabei befinden sich die Langfasern 5 in den Endstücken 20, 30 jeweils nur in dem (zentrischen) Querschnittsbereich 25 an dem Endstück 20 und dem zentrischen Querschnittsbereich 35 an den Endstücken 30.

An den Endstücken 30 schließt sich radial nach außen an den Querschnittsbereich 35 der Querschnittsabschnitt 36 an, der ebenfalls aus einem Faserverbundwerkstoff 2 besteht und hier über das gleiche Matrixmaterial 3 verfügt wie auch das Mittelstück 11.

Im Unterschied zum Mittelstück 11 und den Querschnittsbereichen 25, 35, werden in den Querschnittsabschnitten 26, 36 kürzere Verstärkungselemente 6 eingesetzt, die hier aus Kurzfasern 6a oder Faserschnipseln 6b und/oder Verstärkungspartikeln 6c bestehen können.

In einfachen Ausgestaltungen wird ein Matrixmaterial 3 (zusammen mit Kurzfasern 6a) an den Enden 16, 17 angespritzt, wobei das Matrixmaterial 3 wenigstens dort zunächst wieder aufgeschmolzen wird, sofern es sich zuvor schon (etwas) verfestigt hatte. Durch diese Herstellung bedingt entstehen zwischen dem Querschnittsabschnitt 36 und dem Querschnittsbereich 35 innerhalb des Matrixmaterials 3 keine separaten Grenzflächen oder Klebeflächen oder Oberflächen. Ein Übergang zwischen den Querschnittsbereich 35 und zum Beispiel dem Querschnittsabschnitt 36 ist nur durch die Veränderung des eingebetteten Verstärkungsmaterials verstellbar. Das führt zu einer besonders hohen Belastbarkeit der anmeldungsgemäßen Laufradkomponente 1.

Bei dem Ausführungsbeispiel nach Figur 4 befinden sich in den Zentralbereichen 29, 39 der Endstücke die Langfasern 5.

In den Figur 5a-5c sind Varianten einer anmeldungsgemäßen Laufradkomponente 1 mit einem Speichensystem 40 und einer Speiche 10 dargestellt, wobei hier jeweils nur das Endstück 20 und ein Teil des Mittelstücks 11 der Speiche 10 abgebildet ist.

Im Unterschied zu Figur 4 ist hier in Fig. 5a das Endstück 20 insgesamt kegelförmig ausgebildet. Auch hier ist der Querschnittsbereich 25 von Langfasern 5 durchsetzt, während sich radial nach außen der Querschnittsabschnitt 26 mit dem gleichen Matrixmaterial 3, aber kürzeren Verstärkungselementen 6, anschließt. Das Endstück 20 bildet auch hier den Kopfabschnitt 21 der Speiche 10 und dient zur Abstützung der Speiche an der Felge oder der Nabe.

Wie die schematische Skizze im rechten Teil von Figur 5a zeigt, sind im Ausführungsbeispiel nach Figur 5a sowohl das Mittelstück 11 als auch das Endstück 20 rotationssymmetrisch ausgebildet. Auch hier ist es möglich, dass das Mittelstück 11 aerodynamisch ausgebildet ist, sodass dann die Querschnittsform von der Kreisform abweicht.

Figur 5b zeigt eine weitere Variante einer Speiche 10 eines Speichensystems 40 einer Laufradkomponente 1, bei der das Endstück 20 über keinen Verdickungsabschnitt 23, sondern hier nur einen rechtwinklig abstehenden Stütz- oder Zylinderabschnitt 24 verfügt.

Im rechten Teil von Figur 5b sind beispielhaft einige unterschiedliche Verstärkungselemente 6a, 6b und 6c eingezeichnet, die in dem Querschnittsabschnitt 26 an dem Endstück 20 (und in dem Querschnittsabschnitt 36 des anderen Endstücks 30) eingesetzt werden können.

Dabei können sowohl wirr angeordnete kürzere Verstärkungselemente 6a als auch gleichgerichtet ausgerichtete Verstärkungselemente 6a in kurzer Form als auch Faserschnipsel 6b in gleicher oder unterschiedlicher Orientierung und auch Verstärkungspartikel 6c eingesetzt werden. Möglich ist auch eine Kombination unterschiedlicher Verstärkungselemente 6a, 6b und 6c. Möglich ist es auch, dass nur wenige oder gar keine Verstärkungselemente in einem Querschnittsabschnitt 26, 36 enthalten sind.

Figur 5b zeigt nur ein Endstück 20. Das andere Endstück 30 kann identisch ausgebildet sein. Oder beide Endstücke 20, 30 weisen jeweils (auch) einen Gewindeabschnitt 31 eines Gewindes 43 auf. Die Form eines oder beider Endstücke kann ausgebildet sein, wie zuvor abgebildet. Ein Laufrad kann unterschiedliche Speichen umfassen.

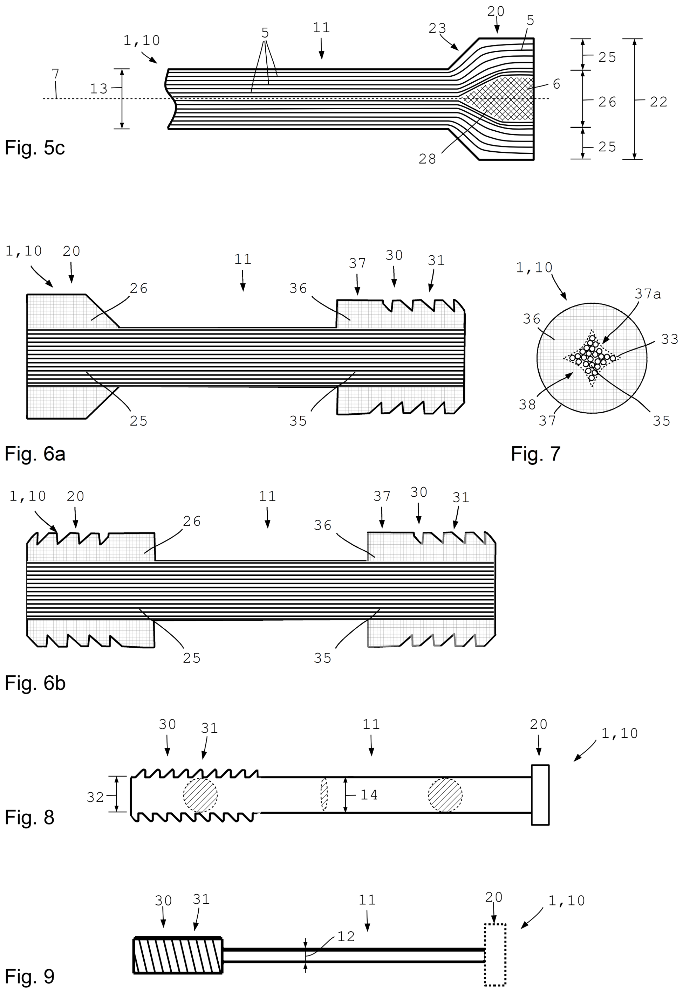

Figur 5c zeigt eine Variante einer Laufradkomponente mit einer Speiche 10, wobei hier an dem Endstück 20 nach der Pultrusion das Ende 16 aufgeschmolzen und ein konusähnliches Element eingeführt wird, wobei der Hohlraum nach dem Entfernen einen konusähnlichen Abschnitt 28 hinterlässt, der mit einem Faserverbundwerkstoff 2 und einem Matrixmaterial 3 und Verstärkungselementen 4 aufgefüllt wird. Zentral wird hier der Querschnittsabschnitt 26 mit kürzeren Verstärkungselementen 6 zur Verfügung gestellt, während sich die Langfasern 5 in dem Querschnittsbereich 25 dann ringförmig um den Querschnittsabschnitt 26 erstrecken. Insgesamt ist das Endstück so auf einen Durchmesser 22 aufgeweitet.

Figur 6a zeigt eine weitere Variante, wobei hier das Endstück 30 länger ausgebildet ist bzw. wobei sich hier der Gewindeabschnitt 31 des Gewindes 43 nicht über die vollständige Länge des Endstücks 30 erstreckt. Es schließt sich ein Endabschnitt 37 an, der hier zylindrisch ausgebildet ist. Das Endstück 30 verfügt über ein asymmetrisches Außengewinde 43, bei dem die Gewindeflanken 43a, 43b unterschiedlich steil ausgerichtet sind.

Auch in Figur 6a sind die Langfasern 5 über die vollständige Länge der Speiche 10 vorgesehen und erstrecken sich praktisch vollständig über die Länge der Endstücke 20, 30 und des Mittelstücks 11.

Figur 6b zeigt eine Variante einer Speiche 10 mit zwei Enstücken 20, 30, die beide jeweils ein Außengewinde aufweisen und hier bezüglich des Mittelstücks 11 spiegelsymmetrisch ausgebildet sind, um jeweils optimal die auftretenden Zugkräfte abzuleiten.

Der Querschnittsbereich 25 umfasst (nur) Langfasern als Verstärkungsfasern und erstreckt sich von einem Ende der Speiche bis zum anderen Ende. Das bedeutet, dass sich die Langfasern vollständig durch die Speiche von einem Endstück durch das Mittelstück und das andere Endstück erstrecken.

In allen Ausgestaltungen werden die Querschnittsbereiche 25, 35 an den Endstücken 20, 30 von Querschnittsabschnitten 26, 36 begrenzt (und hier umgeben), in denen (nur) Kurzfasern und (wenigstens nahezu) keine Langfasern enthalten sind. Das ist hier durch die unterschiedlichen Schraffuren angedeutet. Das Mittelstück 11 wird werkstoffeinstückig mit den Endstücken 20, 30 hergestellt. Die Endstücke 20, 30 weisen insbesondere das gleiche Matrixmaterial wie das Mittelstück auf.

Im Figur 7 ist ein Querschnitt in dem Endabschnitt 37 aus Figur 6 abgebildet. Hier wird deutlich, dass die im Mittelstück 11 innerhalb eines Kreises angeordneten Verstärkungselemente 4 in dem Endstück 30 (und gegebenenfalls auch in dem Endstück 20) eine andere Querschnittsform einnehmen. Und zwar wird die Querschnittsform unrund ausgestaltet, sodass sich ein abweichender Querschnitt 37a ergibt, der hier einem Rechteck ähnelt, welches an den Seitenflächen Einbeulungen aufweist. Die gestrichelt eingezeichnete Hüllkurve 33 umgibt die Verstärkungselemente 4 möglichst eng und ist nur eingezeichnet, um die Form zu verdeutlichen. Real gibt es diese Hüllkurve nicht. Es handelt sich nicht um eine separate Schicht. Der Speichenkörper ist werkstoffeinstückig gefertigt. Die Querschnittsform kann auch als sternförmig bezeichnet werden. Dadurch wird die Übertragung eines höheren Drehmoments ermöglicht, was bei der Einstellung der Speichenspannung von Vorteil ist. Entlang der Speiche kann der abweichende Querschnitt 37a als konusförmiger Abschnitt 38 ausgestaltet sein bzw. in Richtung des Endes eine zunehmende Querabmessung aufweisen.

Es sind auch andere abweichende Querschnittsformen für den Querschnittsbereich bzw. Langfaserbereich 35 möglich, so kann dessen Querschnittsform auch dreieckig oder oval oder T-förmig oder V-, oder W-förmig oder dergleichen ausgebildet sein.

In den Figuren 8-10 ist eine weitere Laufradkomponente mit einem Speichensystem 40 mit einer Speiche 10 abgebildet, wobei Figuren 8 und 9 zwei Seitenansichten zeigen, wobei klar wird, dass die Speiche 10 aerodynamisch ausgestaltet ist, sodass die minimale Querabmessung 12 erheblich geringer ist als die maximale Querabmessung 14 in dem Mittelstück 11.

An den Enden 16, 17 ist die Speiche 10 an den Endstücken 20, 30 jeweils wieder rund ausgebildet und verfügt an dem Endstück 30 über einen Gewindeabschnitt 31. Der Außendurchmesser 32 an dem Endstück 30 kann der maximalen Querabmessung 14 in dem Mittelstück 11 entsprechen.

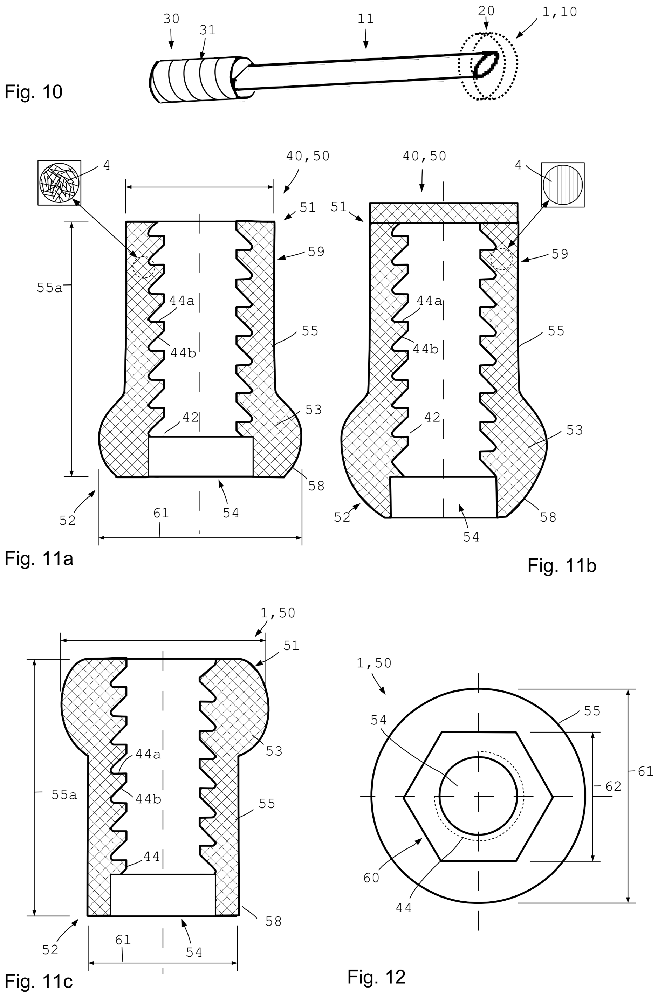

In den Figuren 11a, 11b und 11c ist eine anmeldungsgemäße Laufradkomponente 1 mit einem Speichennippel 50 eines Speichensystems 40 abgebildet. Dabei zeigen die Figuren 11a und 11b zwei leicht unterschiedliche Ausführungsbeispiele jeweils in einem Querschnitt.

Der Speichennippel 50 besteht hier jeweils aus einem Faserverbundwerkstoff 2 mit einem Matrixmaterial 3 und Verstärkungselementen 4. Die Verstärkungselemente 4 können als Langfasern 5 oder als kürzere Verstärkungselemente 6 ausgebildet sein.

Der Speichennippel 50 verfügt über einen Nippelkörper 55, der sich über eine Länge 55a erstreckt, die zum Beispiel 10 mm betragen kann. Möglich sind auch etwas kürzere und auch etwas längere Ausgestaltungen. Der Nippelkörper 55 weist eine größere Länge 55a als ein Durchmesser 61 des Nippelkörpers auf.

Der Nippelkörper verfügt über Endabschnitte 51 und 52 an den Enden 58 und 59. An dem Ende 58 ist in Fig. 11a und Fig. 11b der Nippelkopf 53 ausgebildet, der abgerundet ausgebildet ist und die Anlagefläche zur Verfügung stellt, an der sich der Nippel zum Beispiel an der Felge abstützt.

An dem Nippelkopf 53 ist eine Aufnahme 54 (Einführhilfe) für das Gewindeende einer Speiche ausgebildet. In der Aufnahme ist ein Innengewinde 44 ausgebildet. Über das Gewinde 44 kann der Nippelkopf 53 auf ein Speichenende aufgeschraubt werden. Die Aufnahme 54 kann als Durchgangsöffnung ausgebildet sein. Es ist auch möglich, dass das andere Ende 51 teilweise oder ganz verschlossen ist. Dann ist die Aufnahme 54 ein Sackloch.

Fig. 11c zeigt eine andere Ausgestaltung eines Speichennippels 50, bei der das Gewinde 44 andersherum ausgerichtet ist. Hier liegt der Speichennippel nicht mit dem Endabschnitt 52 auf der Felge auf, sondern mit der kegelförmigen oder abgerundeten Außenseite des Nippelkopfes 53, die zum Ende 52 hinzeigt.

Figur 12 zeigt eine Draufsicht auf den Endabschnitt 51 des Speichennippels 50. Dadurch ist die Werkzeuganlage 60 mit der Schlüsselweite 62 an dem Nippelkörper 55 zu sehen. Zentral ist die Aufnahme 54 zu erkennen, in der das Gewinde 44 ausgebildet ist.

Das Speichensystem 40 kann hohe Kräfte übertragen und ist selbsthemmend ausgebildet. Ein Verkleben von Speiche und Speichennippel ist deshalb nicht nötig. Der nicht vorhandene Klebstoff verbessert und vereinfacht die Wartungsmöglichkeiten.

Durch den Einsatz von Speichennippeln 50 aus Faserverbundwerkstoff kann ein leichterer Speichennippel zur Verfügung gestellt werden, der weiterhin auch eine mögliche Kontaktkorrosion verschiedener Metalle miteinander zuverlässig verhindert. Insbesondere, wenn Verstärkungselemente mit einem Glasfaseranteil eingesetzt werden, werden derartige Probleme zuverlässig verringert oder ganz verhindert.

In allen Ausgestaltungen wird eine stoffschlüssige und werkstoffeinstückige Verbindung erzielt.

Bei der Herstellung von Speichennippeln 50 können beispielsweise in einer Herstellform 20, 30, 40 oder mehr Kavitäten gleichzeitig gefüllt werden, sodass nach der Herstellung eines Werkzeugs eine kostengünstige Herstellung möglich ist.

Das Gewinde wird bei den Laufradkomponenten unmittelbar in dem Faserverbundwerkstoff zur Verfügung gestellt.

**Bezugszeichenliste:**

| | | | |
|---|---|---|---|
| 1 | Laufradkomponente | 33 | Hüllkurve |
| 2 | Faserverbundwerkstoff | 35 | Querschnittsbereich, Langfaserbereich |
| 3 | Matrixmaterial | | |
| 4 | Verstärkungselemente | 36 | Querschnittsabschnitt Kurzfaserabschnitt |
| 5 | Langfaser | | |
| 6 | kürzere Verstärkungselemente | 37 | Endabschnitt |
| | | 37a | abweichender Querschnitt |
| 6a | Kurzfasern | 38 | konusähnlicher Abschnitt |
| 6b | Faserschnipsel | 39 | Zentralbereich |
| 6c | Verstärkungspartikel | 40 | Speichensystem |
| 7 | Längsachse, axiale Richtung | 41 | Verbindungselement, Speicheneinheit |
| 10 | Speiche | | |
| 10a | Länge von 10 | 42 | Verbindungselement, Speicheneinheit |
| 11 | Mittelstück | | |
| 11a | Länge von 11 | 43 | Gewinde, Außengewinde |
| 12 | Querabmessung (minimal) | 43a | Gewindeflanke (flacher) |
| 13 | Querabmessung (mittel) | 43b | Gewindeflanke (steiler) |
| 14 | Querabmessung (maximal) | 43c | minimaler Durchmesser |
| 15 | Speichenkörper | 43d | maximaler Durchmesser |
| 16 | Ende | 44 | Gewinde, Innengewinde |
| 17 | Ende | 44a | Gewindeflanke (flacher) |
| 19 | Zentralbereich | 44b | Gewindeflanke (steiler) |
| 20 | Endstück | 44c | minimaler Durchmesser |
| 20a | Länge von 20 | 44d | maximaler Durchmesser |
| 21 | Kopfabschnitt | 45 | Winkel (flacher) |
| 22 | Außendurchmesser | 46 | Winkel (steiler) |
| 23 | Verdickungsabschnitt | 47 | Flankenwinkel |
| 24 | Stütz-, Zylinderabschnitt | 48 | Gewindesteigung von 43, 44 |
| 25 | Querschnittsbereich | 50 | Speichennippel |
| 26 | Querschnittsabschnitt | 51 | Endabschnitt |
| 28 | konusähnlicher Abschnitt | 52 | Endabschnitt |
| 29 | Zentralbereich | 53 | Nippelkopf |
| 30 | Endstück | 54 | Aufnahme |
| 30a | Länge von 30 | 55 | Nippelkörper |
| 31 | Gewindeabschnitt, Außengewinde | 55a | Länge |
| | | 58 | Ende (abgerundet) |
| 32 | Außendurchmesser | 59 | Ende (Werkzeugende) |
| 60 | Werkzeuganlage | 105 | Hinterraddämpfer |
| 61 | Durchmesser | 106 | Lenker |
| 62 | Schlüsselweite | 107 | Sattel |
| 100 | Fahrrad | 108 | Nabe |
| 101 | Rad, Vorderrad | 109 | Felge |
| 102 | Rad, Hinterrad | 111 | Ritzeleinrichtung |
| 103 | Rahmen | 112 | Tretkurbel |
| 104 | Gabel, Federgabel | | |

## Patentansprüche

1. Laufradkomponente (1) für ein Fahrzeug (100) und insbesondere für Fahrräder, umfassend ein Speichensystem (40) mit zwei miteinander zusammenwirkenden Verbindungselementen (41, 42), nämlich mit einem im Betrieb auf Zug belasteten und als Speiche (10) ausgebildeten Verbindungselement (41) und mit wenigstens einem als Speichennippel (50) ausgebildeten Verbindungselement (42),
wobei sich die Speiche (10) in axialer Richtung (7) erstreckt und ein Mittelstück (11) und zwei Endstücke (20, 30) umfasst, um die Speiche (10) mittels der Endstücke (20, 30) lösbar mit einer Nabe (108) und mit einer Felge (109) zu verbinden, wobei die Speiche (10) aus einem Faserverbundwerkstoff (2) gefertigt ist und wenigstens ein Matrixmaterial (3) und darin eingebettete Verstärkungselemente (4) umfasst,
wobei der Speichennippel (50) und wenigstens ein Endstück (30) der Speiche (10) miteinander zusammenwirkende Gewinde (43, 44) aufweisen, um die Speiche (10) und den Speichennippel (50) miteinander zu verbinden, wobei eines der Gewinde (44) als Innengewinde (44) und eines der Gewinde (43) als Außengewinde (43) ausgebildet ist,
wobei die miteinander zusammenwirkenden Gewinde (43, 44) der Verbindungselemente (41, 42) in axialer Richtung (7) jeweils unsymmetrisch ausgebildet sind, sodass jeweils eine Gewindeflanke (43a, 44a) erheblich flacher als die andere steilere Gewindeflanke (43b, 44b) ausgebildet ist, **dadurch gekennzeichnet,**
**dass** die Endstücke (20, 30) einstückig mit dem Mittelstück (11) ausgebildet sind und jeweils ein Ende (16, 17) der Speiche (10) bilden und dass wenigstens einige der Verstärkungselemente (4) als Langfasern (5) ausgebildet sind und sich in einem Querschnittsbereich (25, 35) vollständig durch das Mittelstück (11) und jeweils über wenigstens einen wesentlichen Teil beider Endstücke (20, 30) erstrecken.

2. Laufradkomponente (1) nach Anspruch 1, wobei wenigstens ein Endstück (20, 30) wenigstens einen Querschnittsabschnitt (26, 36) mit darin eingebetteten kürzeren Verstärkungselementen (6) umfasst,
und wobei ein erheblicher Teil des Querschnittsbereichs (25, 35) ausschließlich Langfasern aufweist und wobei ein erheblicher Teil des Querschnittsabschnitts (26, 36) ausschließlich kürzere Verstärkungselemente (6) aufweist.

3. Laufradkomponente (1) nach einem der vorhergehenden Ansprüche, wobei wenigstens eines der Endstücke (30) einen Gewindeabschnitt (31) zur Verschraubung mit einem Speichennippel (50) umfasst,
und/oder wobei wenigstens eines der Endstücke (20) einen Kopfabschnitt (21) zur Abstützung der Speiche aufweist.

4. Laufradkomponente nach einem der vorhergehenden Ansprüche, wobei die flachere Gewindeflanke (43a, 434a) im montierten Zustand jeweils in Zugrichtung ausgerichtet ist und eine tragende Flanke bildet und wobei die flachere Gewindeflanke (43a, 44a) einen Winkel (45) von weniger als 10° senkrecht zur Längsrichtung (7) aufweist,
und wobei die steilere Gewindeflanke (43b, 44b) einen Winkel (46) von größer als 20° senkrecht zur Längsrichtung (7) aufweist und eine nichttragende Flanke bildet und wobei die steilere Gewindeflanke (43b, 44b) einen Winkel (46) von kleiner als 60° senkrecht zur Längsrichtung (7) aufweist.

5. Laufradkomponente nach einem der vorhergehenden Ansprüche, wobei ein Flankenwinkel (47) zwischen den Gewindeflanken (43a, 43b; 44a, 44b) zwischen 25° und 60° beträgt,
und wobei ein maximaler Gewindedurchmesser (43d) eines Außengewindes (43) kleiner 5 mm beträgt und wobei ein minimaler Gewindedurchmesser (44c) eines Innengewindes (44) größer 2 mm beträgt,
und wobei eine Gewindesteigung (48) zwischen 0,3 mm und 0,9 mm beträgt.

6. Laufradkomponente nach einem der vorhergehenden Ansprüche, wobei der Speichennippel wenigstens teilweise aus einem Metall besteht.

7. Laufradkomponente (1) nach einem der vorhergehenden Ansprüche, wobei das Matrixmaterial (3) wenigstens eines Verbindungselements (41, 42) insgesamt einheitlich ist.

8. Laufradkomponente (1) nach einem der vorhergehenden Ansprüche, wobei der Querschnittsbereich (25, 35) in wenigstens einem Endabschnitt (37) einen von einem rotationssymmetrischen Querschnitt abweichenden Querschnitt (37a) aufweist und wobei der abweichende Querschnitt (37a) insbesondere einer Form aus einer Gruppe von Formen entnommen ist, welche eine mehreckige, sternförmige, ovale, elliptische oder kegelmantelförmige Form umfasst.

9. Laufradkomponente (1) nach einem der vorhergehenden Ansprüche, wobei der Querschnittsabschnitt (26, 36) zentrisch in dem Endstück (20, 30) aufgenommen ist und einen konusähnlichen Abschnitt (38) aufweist.

10. Laufradkomponente (1) nach einem der vorhergehenden Ansprüche, wobei der Querschnittsabschnitt (26, 36) den Querschnittsbereich (25, 35) radial umgibt und wobei der Querschnittsabschnitt (26, 36) eine Verdickung an dem Endstück (20, 30) bildet und wobei sich die Langfasern (5) durch einen Zentralbereich (19) des Mittelabschnitts (11) und wenigstens einen Zentralbereich (29, 39) eines Endstücks (20, 30) erstrecken.

11. Laufradkomponente (1) nach einem der vorhergehenden Ansprüche, wobei an dem Querschnittsabschnitt (36) der Gewindeabschnitt (31) ausgebildet ist.

12. Laufradkomponente (1) nach einem der vorhergehenden Ansprüche, wobei wenigstens ein Verbindungselement (41, 42) ein thermoplastisches Matrixmaterial umfasst.

13. Laufradkomponente (1) für ein Fahrzeug (100) und insbesondere für Fahrräder, umfassend ein im Betrieb auf Zug belastetes und als Speiche (10) ausgebildetes Verbindungselement (41) eines Speichensystems (40),
wobei sich die Speiche (10) in axialer Richtung (7) erstreckt und ein Mittelstück (11) und zwei Endstücke (20, 30) umfasst, um die Speiche (10) mittels der Endstücke (20, 30) lösbar mit einer Nabe (108) und mit einer Felge (109) zu verbinden, wobei die Speiche (10) aus einem Faserverbundwerkstoff (2) gefertigt ist und wenigstens ein Matrixmaterial (3) und darin eingebettete Verstärkungselemente (4) umfasst,
wobei wenigstens ein Endstück (30) der Speiche (10) ein Gewinde (43) aufweist, um die Speiche (10) mit einem Gewinde (44) eines anderen Verbindungselement (42) zu verbinden, wobei das Gewinde (43) der Speiche (10) in axialer Richtung (7) unsymmetrisch ausgebildet ist, sodass jeweils eine Gewindeflanke (43a) erheblich flacher als die andere steilere Gewindeflanke (43b) ausgebildet ist, **dadurch gekennzeichnet, dass** die Endstücke (20, 30) einstückig mit dem Mittelstück (11) ausgebildet sind und jeweils ein Ende (16, 17) der Speiche (10) bilden und dass wenigstens einige der Verstärkungselemente (4) als Langfasern (5) ausgebildet sind und sich in einem Querschnittsbereich (25, 35) vollständig durch das Mittelstück (11) und jeweils über wenigstens einen wesentlichen Teil beider Endstücke (20, 30) erstrecken.

14. Laufradkomponente (101, 102) eines Fahrzeugs und insbesondere für ein Fahrrad, mit einer Felge (109) und einer Nabe (108) und mit mehreren Speichensystemen (40), wobei ein Speichensystemen (40) zwei miteinander zusammenwirkende Verbindungselementen (41, 42) umfasst,
nämlich ein im Betrieb auf Zug belastetes und als Speiche (10) ausgebildetes Verbindungselement (41)
und wenigstens ein als Speichennippel (50) ausgebildetes Verbindungselement (42),
wobei sich die Speiche (10) in axialer Richtung (7) erstreckt und ein Mittelstück (11) und zwei gegenüberliegende und voneinander entfernte Endstücke (20, 30) umfasst, um die Nabe (108) mit der Felge (109) mittels der Speiche (10) und wenigstens einem Speichennippel (50) lösbar zu verbinden und an den Endstücken (20, 30) abzustützen,
wobei die Speiche (10) aus wenigstens einem Faserverbundwerkstoff (2) gefertigt ist und wenigstens ein Matrixmaterial (3) und darin eingebettete Verstärkungselemente (4) umfasst,
wobei der Speichennippel (50) und wenigstens ein Endstück (30) der Speiche (10) miteinander zusammenwirkende Gewinde (43, 44) aufweisen, um die Speiche (10) und den Speichennippel (50) miteinander zu verbinden, wobei eines der Gewinde (44) als Innengewinde (44) und eines der Gewinde (43) als Außengewinde (43) ausgebildet ist,
wobei die miteinander zusammenwirkenden Gewinde (43, 44) der Verbindungselemente (41, 42) in axialer Richtung (7) jeweils unsymmetrisch ausgebildet sind, sodass jeweils eine Gewindeflanke (43a, 44a) erheblich flacher als die andere steilere Gewindeflanke (43b, 44b) ausgebildet ist, **dadurch gekennzeichnet,**
**dass** die Endstücke (20, 30) einstückig mit dem Mittelstück (11) ausgebildet sind und jeweils ein Ende (16, 17) der Speiche (10) bilden
und **dass** wenigstens einige der Verstärkungselemente (4) als Langfasern (5) ausgebildet sind und sich in einem Querschnittsbereich (25, 35) vollständig durch das Mittelstück (11) und jeweils über wenigstens einen wesentlichen Teil beider Endstücke (20, 30) erstrecken.

15. Laufradkomponente (1, 101, 102) nach dem vorhergehenden Anspruch, wobei das Mittelstück (11) aerodynamisch geformt ist und wobei das Endstück (30) der Speiche (10) wenigstens nahezu vollständig innerhalb der Felge (109) aufgenommen ist.
